# EUROPEAN PATENT SPECIFICATION

(11) **EP 3 912 813 B1**
(45) Date of publication and mention of the grant of the patent: **15.07.2026**
(21) Application number: 20741462.4
(22) Date of filing: 15.01.2020
(51) Int. Cl.: B32B 27/32, B29B 7/00, B29B 7/48, B29B 7/72, B29B 7/82, B29C 48/02, B29C 48/21, B32B 3/26, B32B 27/22, B32B 27/08, C08J 9/26, H01M 50/417, H01M 50/449

(54) **POLYOLEFIN MULTILAYER MICROPOROUS FILM AND PRODUCTION METHOD THEREFOR**
MEHRSCHICHTIGER MIKROPORÖSER POLYOLEFINFILM UND HERSTELLUNGSVERFAHREN DAFÜR
FILM MICROPOREUX MULTICOUCHE DE POLYOLÉFINE ET PROCÉDÉ DE PRODUCTION DE CELUI-CI

(30) Priority: 16.01.2019 JP 2019004897
(43) Date of publication of application: 24.11.2021
(73) Proprietor: Toray Industries, Inc., Tokyo 103-8666 (JP)
(72) Inventor: NAKAJIMA, Konomi, Nasushiobara-shi, Tochigi 329-2763 (JP); MATSUSHITA, Katsuhiko, Nasushiobara-shi, Tochigi 329-2763 (JP); LI, Dan, Nasushiobara-shi, Tochigi 329-2763 (JP); KANEKO, Kei, Nasushiobara-shi, Tochigi 329-2763 (JP)
(74) Representative: Mewburn Ellis LLP
(86) International application number: PCT/JP2020/001038
(87) International publication number: WO 2020/149294

(56) References cited:
- WO-A1-2014/192862
- WO-A1-2015/194667
- WO-A1-2018/168835
- WO-A1-2018/168835
- JP-A- 2010 502 472
- JP-A- 2012 506 792
- US-A1- 2017 125 766

## Description

### TECHNICAL FIELD

The present invention relates to a multilayered microporous polyolefin film and a production method therefor.

### BACKGROUND ART

Microporous films are now used in various fields including filter such as filtration films and dialysis membrane, and separators such as for batteries and electrolytic capacitors. In particular, microporous polyolefin films that contain polyolefin as resin material have been used widely in recent years for battery separators because they are high in chemical resistance, insulating properties, and mechanical strength and also have good shutdown characteristics.

Having high energy density, such secondary batteries as lithium ion secondary batteries are now in wide use as batteries for personal computers and portable telephones. In recent years, they are used as batteries for driving mounted on environment friendly vehicles such as electric automobiles and hybrid electric automobiles. Higher performance products with increased energy density, such as lithium ion secondary batteries, have been developed constantly aiming to achieve longer traveling distances compared to gasoline automobiles. At the same time, demands for safety features are growing and high-level improvements have been required increasingly.

In the case of large-type high capacity lithium ion batteries, in particular, higher reliability is important as well as their characteristics as batteries. Specifically, for example, an increase in energy density can lead to the occurrence of thermal runaway at lower temperatures, and therefore, it is necessary to ensure a higher-level safety. From the viewpoint of safety, the separators used in batteries are required to have particularly high resistance to internal short-circuits in addition to other characteristics such as resistance to external short-circuits and resistance to high temperatures.

To ensure the safety of these separators, good methods include the adoption of a high strength design to prevent the breakage of films, thereby avoiding short circuits and the control of the behaviors of separators exposed to high-temperature heat, which is known to be effective for depressing temperature rise in the batteries.

The nailing test is a major technique, and also a widely used test method, for the evaluation of safety associated with internal short-circuits. In this test, a nail is driven through a battery to forcedly cause an internal short-circuit while observing the behaviors of the battery. Here, it is known that the behaviors of a battery are controlled by heat shrinkage and melting properties of the separator contained.

In addition, different safety tests are generally selected depending on the type of the secondary battery, for example, a lithium ion secondary battery under test. Safety evaluation of a cylindrical battery consisting of a positive electrode, a negative electrode, and a separator that are wound and packed in a can is performed based on the so-called impact test in which a weight is dropped from the outside of the battery while checking if short-circuiting, explosion, or ignition occurs as a result of the breakage of the separator that causes direct contact of the electrodes. On the other hand, in the case of a laminate type battery, also called a pouch type battery, in which a positive electrode and a negative electrode alternately stacked with a separator interposed between them are sealed by lamination instead of packing in a can,
the aforementioned nailing test of the battery is performed so that the separator is broken without fail to cause an internal short-circuit while checking the occurrence and degree of short-circuiting, explosion, or ignition resulting from direct contact of the electrodes.

The multilayer microporous polyolefin film used in a separator is also required to have a shutdown function for preventing an increase in temperature in the lithium ion secondary battery. The shutdown function is intended to stop the battery reaction when the temperature becomes high, as a result of melting of polyolefin in the separator to block the pores. Recent high energy density designs require a shutdown function that acts at lower temperatures.

Furthermore, the multilayer microporous polyolefin film used in a separator is also required to have meltdown property in addition to the shutdown function. The meltdown property is the ability to retain a melt shape in case the temperature in the battery rises further after shutdown in order to prevent short-circuiting between the electrodes from being caused by the melting of the separator.

The separator in a battery works for insulation to prevent short-circuiting between the two electrodes in the battery, thereby ensuring its safety, while it has ion permeability by retaining an electrolyte in its pores. Thus, it plays an important role in ensuring the safety of the battery and maintaining battery characteristics such as capacity, output characteristics, and cycle characteristics. In particular, the requirements in recent years have become very strict, and further improvements of separators are urgently required.

Patent document 1 discloses a microporous film that is formed of a thermoplastic resin composition containing 5 to 90 parts by mass of a polyphenylene ether resin relative to 100 parts by mass of a polypropylene resin and has a sea-island structure composed mainly of a sea region containing the polypropylene resin as main component and island regions containing the polyphenylene ether resin as main component, wherein pores are located at the interface between the sea region and the island regions and also within the sea regions. It is described that the microporous film has a high rupture temperature and shows well-balanced permeability, puncture strength, electric resistance of the film, and heat shrinkage rate when used as separator for a battery.

Patent document 2 discloses a multilayered microporous polyolefin film including at least a first microporous layer and a second microporous layer, wherein the first microporous layer is formed of a first polyolefin resin containing polypropylene; the second microporous layer is formed of a second polyolefin resin containing polyethylene having an ultrahigh molecular weight; the film has a thickness of 25 µm or less; the film thickness (µm) and the porosity (%) have the relation porosity (%) / film thickness (µm) ≥ 3.0; and the air permeability (in terms of a film thickness of 16 µm) is 100 sec/100 cc or more and 300 sec/100 cc or less.

Patent document 3 discloses a multilayered microporous film including a first, a second, and a third layer, wherein the first and the third layer contain an ethylene/α-olefin copolymer having a Mw of 1.0 × 10⁶ or less and accounting for 40 wt% to 97 wt% relative to the weight of the first layer and polyethylene having a Mw of more than 1.0 × 10⁶ and accounting for 0 wt% to 25 wt% relative the weight of the third layer, respectively; the second layer contains polypropylene, a polyethylene having a Mw of more than 1.0 × 10⁶, and a polyethylene having a Mw of 1.0 × 10⁶ or less that account for 15 wt% to 40 wt%, 0 wt% to 10 wt%, and 50 wt% to 85 wt%, respectively, relative to the weight of the second layer; and the film has a shutdown temperature of 130.5°C or less and a film rupture temperature of 170.0°C or more.

Patent document 4 discloses a multilayered microporous polyolefin film containing polyethylene as primary component that includes at least two or more layers and has a shutdown temperature in the range of 129.5°C to 135.0°C, a permeability in the range of 50 to 300 seconds/100 cc, a film thickness in the range of 3 to 16 µm, a puncture strength in the range of 100 to 400 gf, and a shutdown speed in the range of 1.55 × 10⁴ to 3.00 × 10⁴ sec. It is described that the film has a high puncture strength and a high air permeation resistance, and that when the separator is applied to a lithium ion battery, it shows good safety features in the nailing test or hot box test.

Patent document 5 discloses a microporous film containing polypropylene that has a weight average molecular weight Mw of 820,000 to 1,000,000, a pentad fraction of 90% to 95%, and a film thickness of 10 to 15 µm. It is described that the film has a high permeability, which represents improvement in ion conductivity associated with high output characteristics of batteries, and a high puncture strength that are achieved in a good balance, and in particular, the film is thin and has a permeability and strength in a good balance, thereby serving to provide a highly safe and practical separator for lithium ion secondary batteries.

### PRIOR ART DOCUMENTS

### PATENT DOCUMENTS

Patent document 1: Japanese Patent No. 05528361
Patent document 2: International Publication WO 2015/194667
Patent document 3. Published Japanese Translation of PCT International Publication JP2012-522354
Patent document 4: Japanese Unexamined Patent Publication (Kokai) No. 2015-208893
Patent document 5: Japanese Unexamined Patent Publication (Kokai) No. 2013-23673

### SUMMARY OF INVENTION

### PROBLEMS TO BE SOLVED BY THE INVENTION

Although the above documents report improved performance in various aspects, they fail to provide multilayered microporous polyolefin films or battery separators that have high safety features represented by good shutdown property and meltdown property serving to cope with abnormal heat generation and have a large puncture elongation that represents an increased resistance to short-circuiting that is caused by foreign objects at a relatively high temperature within the normal operating range.

The present invention mainly aims to provide a multilayered microporous polyolefin film and a battery separator that have good shutdown property and meltdown property and have a large puncture elongation at high temperatures.

### MEANS OF SOLVING THE PROBLEMS

The multilayered microporous polyolefin film according to the present invention has the characteristic features (1) to (5) described below:
(1) A multilayered microporous polyolefin film including a second layer containing an ultrahigh molecular weight polyethylene and a high density polyethylene having, on each of the two surfaces thereof, a first layer containing an ultrahigh molecular weight polypropylene and a high density polyethylene, wherein, in the first layer analyzed by AFM-IR, the regions having a polypropylene content of less than 20% as determined from the displacement of the AFM cantilever measured under a laser irradiation of 1,376 cm⁻¹ and under a laser irradiation of 1,465 cm⁻¹ account for 30% or more and 60% or less; the average of the maximum diameters of the regions having a polypropylene content of 20% or more is 0.1 µm or more and 10 µm or less; and the puncture elongation at 90°C is 0.40 mm/µm or more.
(2) A multilayered microporous polyolefin film as set forth in the paragraph (1), wherein the high density polyethylene in the second layer has a molecular weight distribution (Mw/Mn) of 11 or more.
(3) A multilayered microporous polyolefin film as set forth in either the paragraph (1) or (2), wherein at least either surface of the multilayered microporous polyolefin film is laminated with a porous layer.
(4) A multilayered microporous polyolefin film as set forth in any one of the paragraphs (1) to (3) that is intended for use as a battery separator.
(5) A production method for a multilayered microporous polyolefin film as set forth in any one of the paragraphs (1) to (4), comprising the steps (a) to (f) described below:
   (a) a step for preparing a solution for the first layer by adding a plasticizer to a polyolefin resin containing a high density polyethylene resin and an ultrahigh molecular weight polypropylene resin to be used to form the first layer and melt-kneading it at a Q/Ns (discharge rate/rotating speed) ratio of 0.15 or more and less than 0.30 and a screw rotating speed (Ns) of the twin screw extruder in the range of 50 rpm or more and less than 150 rpm in the case where the twin screw extruder has an inside diameter of 58 mm and an L/D ratio of 42,
   (b) a step for preparing a solution for the second layer by adding a plasticizer to a high density polyethylene resin and an ultrahigh molecular weight polyethylene resin to be used to form the second layer and melt-kneading it,
   (c) a step for forming a gel-like multilayered sheet by extruding, from the die, the solution for the first layer and the solution for the second layer prepared in the steps (a) and (b), and cooling at least one surface at a rate where the microphase is immobilized,
   (d) a step for preparing a stretched multilayered molding by stretching the gel-like multilayered sheet in the machine direction and the width direction,
   (e) a step for preparing a multilayered porous molding by extracting and removing the plasticizer from the multilayered stretched molding and drying it, and
   (f) a step for providing a multilayered microporous polyolefin film by heat-treating the multilayered porous molding.

### ADVANTAGEOUS EFFECTS OF THE INVENTION

The present invention can provide a multilayered microporous polyolefin film having both shutdown property and meltdown property and having a large puncture elongation at high temperatures. When used as a separator, it serves to provide a battery with improved safety features. The puncture elongation at high temperatures referred to herein has little correlation with the general physical property of puncture strength. Specifically, if the puncture strength is high at room temperature, it does not mean that the puncture elongation is large. In addition, even if the puncture strength and puncture elongation are large at room temperature, it does not mean that the puncture elongation is large at high temperatures. According to the present invention, the puncture elongation at 90°C, which is within the high temperature operating range of common batteries, can be increased so that the possibility of short-circuiting in the interior of the battery where the pressure increases is decreased largely.

### BRIEF DESCRIPTION OF THE DRAWINGS

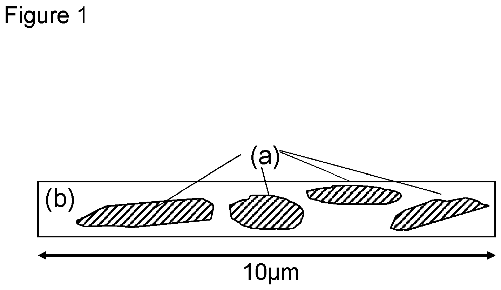

[Fig. 1] A mapping diagram of the polypropylene content developed based on AFM-IR measurement.

### DESCRIPTION OF PREFERRED EMBODIMENTS

The invention is described in more detail below. The multilayered microporous polyolefin film according to the present invention includes a second layer containing an ultrahigh molecular weight polyethylene and a high density polyethylene having, on each of the two surfaces thereof, a first layer containing an ultrahigh molecular weight polypropylene and a high density polyethylene, wherein, in the first layer analyzed by AFM-IR, the regions having a polypropylene content of less than 20% as determined from the displacement of the AFM cantilever measured under a laser irradiation of 1,465 cm⁻¹ and under a laser irradiation of 1,376 cm⁻¹ account for 30% or more and 60% or less; the average of the maximum diameters of the regions having a polypropylene content of 20% or more is 0.1 µm or more and 10 µm or less; and the puncture elongation at 90°C is 0.40 mm/µm or more.

### [First layer]

If in the first layer analyzed by AFM-IR, the regions having a polypropylene content of less than 20% as determined from the displacement of the AFM cantilever measured under a laser irradiation of 1,465 cm⁻¹ and under a laser irradiation of 1,376 cm⁻¹ account for 30% or more and 60% or less and the average of the maximum diameters of the regions having a polypropylene content of 20% or more is 0.1 µm or more and 10 µm or less, it serves to increase the puncture elongation, meltdown temperature, and air permeation resistance and produce a battery with enhanced safety features.

AFM-IR measurement is performed to determine the displacement of the AFM cantilever when irradiating the specimen with a laser beam of 1,465 cm⁻¹ and 1,376 cm⁻¹, and the polypropylene content is calculated from the ratio between strength measurements. The content ratio between polyethylene and polypropylene can be determined from the CH bending of polyethylene measured under laser irradiation of 1,465 cm⁻¹ and the CH₃ bending of polypropylene measured under laser irradiation of 1,376 cm⁻¹.

To determine the average of the maximum diameters of the regions having a polypropylene content of 20% or more, the image obtained by AFM-IR measurement is binarized using HALCON13 of MVTec Software, and the regions having a polypropylene content of 20% or more are extracted and used to calculate the average of their maximum diameters.

The proportion of the regions having a polypropylene content of 20% or less and the average of the maximum diameters of the regions having a polypropylene content of 20% or more can be controlled by kneading the materials to a certain degree where nonuniform structures remain and allowing the polyethylene and polypropylene to form a sea-island structure during the solidification of the molten resins in the casting-cooling step so that the high-molecular weight polypropylene is scattered in micron-order size.

### (1) Ultrahigh molecular weight polypropylene

The ultrahigh molecular weight polypropylene present in the first layer has a weight average molecular weight (Mw) of 1 × 10⁶ or more and contains isotactic polypropylene as primary component. Other polypropylene components may also be contained. There are no specific limitations on the type of polypropylene, and it may be a homopolymer of propylene, a copolymer of propylene and other α-olefin and/or diolefin (propylene copolymer), or a mixture of two or more selected therefrom. From the viewpoint of realizing good mechanical strength and minute through-hole diameters, it is preferable that a homopolymer of isotactic propylene to be contained at least as primary component (accounting for 70 mass% or more, preferably 80 mass% or more, and more preferably 90 mass% or more, of the polypropylene component), and it is preferable that a homopolymer of propylene is the sole component.

The propylene copolymer may be either a random copolymer or a block copolymer. It is preferable for the α-olefin in the propylene copolymer to be an α-olefin containing 8 or less carbon atoms. Examples of such an α-olefin containing 8 or less carbon atoms include ethylene, butene-1, pentene-1, 4-methylpentene-1, octene-1, vinyl acetate, methyl methacrylate, styrene, and combinations thereof. It is preferable for the diolefin in the propylene copolymer to be a diolefin containing 4 to 14 carbon atoms. Examples of such a diolefin containing 4 to 14 carbon atoms include butadiene, 1,5-hexadiene, 1,7-octadiene, and 1,9-decadien.

It is preferable for the other α-olefins and diolefins in the propylene copolymer to account for less than 10 mol% of 100 mol% of the propylene copolymer.

It is preferable for the isotactic polypropylene present in the first layer to have a weight average molecular weight of 1 × 10⁶ or more, more preferably 1.2 × 10⁶ or more, and particularly preferably 1.2 × 10⁶ to 4 × 10⁶. A Mw in the above range allows the multilayered microporous polyolefin film to be high in strength, air permeation resistance, and heat resistance.

It is preferable for the polypropylene components having an Mw of 5 × 10⁴ or less to account for 1 mass% or more and 5 mass% or less of all polypropylene components, which account for 100 mass%, in the first layer. If the content of the polypropylene components having an Mw 5 × 10⁴ or less is in the above range, the existence of a slight amount of a low molecular weight component serves to decrease the shutdown start temperature and improve the safety.

The molecular weight distribution (Mw/Mn) of the polypropylene is preferably 1.01 to 100, more preferably 1.1 to 50, and still more preferably 2.0 to 20. If the Mw/Mn ratio is in the above range, it allows the multilayered microporous polypropylene film according to the present embodiment to have high strength and good meltdown property.

It is preferable for the polypropylene to contain an isotactic polypropylene having a mesopentad fraction (mmmm fraction) of 92% or more and 98% or less, more preferably 93% or more and 97% or less, and still more preferably 94% or more and 96% or less. A mmmm fraction of 92.0% or more ensures a good balance between puncture elongation and strength at 90°C and a high resistance to foreign matter. A mesopentad fraction in the above range ensures an improved puncture elongation at 90°C in addition to high temperature meltdown and highly improved air permeation resistance and appearance.

In addition, there are other generally used polypropylenes such as syndiotactic polypropylene and atactic polypropylene, but if used as primary component, they are unsuitable for developing a moderate crystallinity or forming a layered structure and cannot be expected to work for improving the puncture elongation

It is noted that the above Mw, Mw/Mn, and mmmm fraction are measured by the methods described later.

In the first layer, it is preferable for the polypropylene to account for 4 mass% or more and less than 10 mass% of the total quantity of resin in the multilayered microporous polyolefin film, which accounts for 100 mass%. A polypropylene content in the above range allows the multilayered microporous polyolefin film to be high in strength and air permeation resistance.

### (2) High density polyethylene

The high density polyethylene contained in the first layer referred to herein means a polyethylene component having a density of 0.94 g/cm³ or more Here, the high density polyethylene preferably has a weight average molecular weight (Mw) of 1 × 10⁵ or more and less than 1 × 10⁶, more preferably 1.5 × 10⁵ or more and 9 × 10⁵ or less, and still more preferably 2 × 10⁵ or more and 8 × 10⁵ or less. A Mw in the above range ensures a high strength and good appearance.

In addition, it is preferable for the high density polyethylene contained in the first layer to account for 50 mass% or more, more preferably 60 mass% or more, and still more preferably 60 mass% or more and 80 mass% or less, of the total quantity of resin in the first layer, which accounts for 100 mass%. A high density polyethylene content of 50 mass% or more enables the formation of a film having high strength and good appearance.

### (3) Sea-island structure

Conventionally, it has been considered that when two different materials are mixed, it is commonly good to mix them as uniformly as possible. For the present invention, the inventors developed a technique in which a high molecular weight polypropylene and a high density polyethylene are kneaded to a certain degree where nonuniform structures remain, instead of mixing them as uniformly as possible, and the polyethylene and polypropylene are allowed to form a sea-island structure during the solidification of the molten resins in the casting-cooling step, thereby producing a microporous film in which the sea-island structure is maintained to allow the high molecular weight polypropylene to be scattered in micron-order size to realize a large puncture elongation, high meltdown resistance, and high air permeation resistance.

The sea-island structure referred to herein is a structure containing a sea region in which polypropylene accounts for less than 20% whereas polyethylene content accounts for 80% or more and island regions in which polypropylene accounts for 20% or more whereas polyethylene accounts for less than 80%. In the first layer, it is preferable for the sea region to account for 30% or more and less than 60%. It is preferable for the average of the maximum diameters of the island regions to be 0.1 µm to 10 µm. If both the content of the sea region and the average of the maximum diameters of the island regions are in the above ranges, it ensures a desired puncture elongation, meltdown temperature, and air permeation resistance, thereby serving to produce a battery with an increased safety.

### [Second layer]

### (1) Ultrahigh molecular weight polyethylene

The second layer contains ultrahigh molecular weight polyethylene having a weight average molecular weight (Mw) of 1 × 10⁶ or more. For the present invention, if ultrahigh molecular weight polyethylene is add to the first layer, its compatibility with the polypropylene contained in the first layer will be considerably low due to a significant difference in viscosity, making it difficult to realize uniform mixing. As a result, the resulting film will be so low in uniformity that the production step will be unstable, thus easily leading to a significant variation in quality. From such a point of view, ultrahigh molecular weight polyethylene, which is low in compatibility with polypropylene, is incorporated in the second layer, rather than in the first layer. There are no specific limitations on the type of ultrahigh molecular weight polyethylene as long as it has a Mw in the range specified above, and generally used products may be adopted. Not only an ethylene based homopolymer, but also an ethylene-αolefin copolymer may be used.

It is preferable for the ultrahigh molecular weight polyethylene to account for 20 mass% or more and less than 50 mass% of the total quantity of resin in the multilayered microporous polyolefin film, which accounts for 100 mass%. An ultrahigh molecular weight polyethylene content in the above range allows the multilayered microporous polyolefin film to have high strength and good appearance.

### (2) High density polyethylene

The second layer further contains high density polyethylene. It is preferable for the high density polyethylene to have a density of 0.94 g/cm³ or more and a molecular weight distribution (Mw/Mn) of 10 or more. A Mw/Mn ratio in the above range ensures a desirable shutdown temperature and puncture elongation, thereby serving to produce a battery with an increased safety. It is preferable for the high density polyethylene in the second layer to account for 50 mass% or more, more preferably 60 mass% or more, and still more preferably 60 mass% or more and 80 mass% or less, of the total quantity of resin in the second layer, which accounts for 100 mass%. A high density polyethylene content of 50 mass% or more enables the formation of a film having high strength, large puncture elongation at 90°C, and good appearance.

### [Production method for multilayered microporous polyolefin film]

The production method for a multilayered microporous polyolefin film according to the present invention includes the steps described below:
(A) preparation of solutions for the first layer and the second layer,
(B) formation of a gel-like multilayered sheet,
(C) first stretching
(D) removal of plasticizer
(E) drying
(F) second stretching (optional)
(G) heat treatment
(H) formation of other porous layers

### (A) Preparation of solutions for the first layer and the second layer

In a twin screw extruder, a plasticizer is added to polyolefin resin and melt-kneading is performed to prepare solutions for the first layer and the second layer. The plasticizer is added at least in two stages in the first and the second half of the kneading step. In the first addition stage, the plasticizer is allowed to enter into the resin to achieve sufficient swelling and mixing of the resin. The subsequent addition in the second stage is intended to realize smooth conveyance of the molten resin in the extruder. Regarding the proportions of the plasticizer added in the first stage and second stage, it is preferable that 70% or more and 90% or less is added in the first stage whereas 10% or more and 30% or less is added in the second stage. If the addition in the first stage accounts for more than 90%, an excessive amount of the plasticizer enters in the resin to increase the viscosity of the molten resin. Furthermore, as the amount of the plasticizer to be added in the second stage will decrease, it becomes difficult to convey the molten resin in a high-viscosity state, leading to an increased possibility of the feedneck phenomenon. If the addition in the first stage accounts for less than 70%, the plasticizer will not be supplied in a sufficient amount required for swelling of the resin. Accordingly, kneading will not performed sufficiently and unmelted potions will remain, leading to deterioration in the appearance. Due to the structure of the extruder, swelling of the resin will not be caused even if the proportion of the the plasticizer added in the second stage is increased.

From the viewpoint of phase separation, if the plasticizer added in the first stage accounts for more than 90%, the resin concentrations of polyethylene and polypropylene in the plasticizer will become too low. Molecules will be separated with sufficient distances in between so that the size of the dispersed phase will become fine and the effect of the puncture elongation at 90°C will become small. On the other hand, if the plasticizer added in the first stage accounts for less than 70%, the resin concentrations of polyethylene and polypropylene in the plasticizer will become too high and the distances between molecules will become short. Dissimilar polyolefin resins will undergo entropic repulsion whereas similar polyolefin resins will agglomerate, leading to an increase in the size of the dispersed phase. As a result, concentration of extension stress will occur at the point to cause problems such as nonuniformity of the film.

If the proportions of the plasticizer added in the first stage and the second stage are in the aforementioned ranges, it serves to realize a viscosity suitable for the conveyance of the molten resins and in addition, the polyethylene and polypropylene form an appropriate phase separation structure and realize an improved puncture elongation at 90°C. The kneading performance, molten resin conveyance, and phase separation structure can be controlled by adding appropriate proportions of a plasticizer in multiple stages.

Regarding the ratio of the polyolefin resin and the plasticizer blended in the first layer, it is preferable that the polyolefin resin accounts for 20 to 25 wt% of the total quantity of the polyolefin resin and plasticizer, which accounts for 100 wt%. If the polyolefin resin concentration in the first layer is in the aforementioned range, it serves to produce a film having a low porosity and a high permeability, leading to a high-performance battery.

Regarding the ratio of the polyolefin resin and the plasticizer blended in the second layer, furthermore, it is preferable that the polyolefin resin accounts for 20 to 30 mass% of the total quantity of the polyolefin resin and plasticizer, which accounts for 100 wt%. If the polyolefin resin concentration in the second layer is in the aforementioned range, it serves to prevent the swelling and neck-in problem from occurring at the die outlet during the extrusion of a polyolefin solution, thereby allowing the extruded molding to have good moldability and self-supporting property. From the viewpoint of phase separation, if the polyolefin resin content in the first layer is in the aforementioned range, it allows the polyethylene and polypropylene to maintain appropriate intermolecular distances and form a phase separation structure that is effective for the puncture elongation at 90°C.

The solutions for the first layer and the second layer are supplied from their respective extruders to a single die where the solutions form layers in such a manner that the second layer is sandwiched between two first layers, followed by extruding them into a sheet-like molding. The extrusion may be performed by either the flat die technique or the inflation technique. In either case, the solutions may be supplied to separate manifolds and combined into stacked layers at the lip inlet of a multilayer die (multi-manifold method) or flowing layers of the solutions are formed first and supplied to a die (block method). The multi-manifold method and block method may be performed ordinarily. The gaps in the multilayer flat die may be adjusted to 0.1 to 5 mm. The extrusion temperature is preferably 140°C to 250°C, and the extrusion rate is preferably 0.2 to 15 m/min.

The thickness ratio between the microporous layers in A and B can be adjusted appropriately by controlling the extrusion rates of the solutions for the first layer and the second layer.

For the present invention, a high molecular weight polypropylene and a high density polyethylene are kneaded to a certain degree where nonuniform structures remain, instead of mixing them as uniformly as possible, and the polyethylene and polypropylene are allowed to form a sea-island structure during the solidification of the molten resins in the casting-cooling step.

There are no specific limitations on the method to be adopted to form such a sea-island structure, but a specific procedure is described below. First, the material for the first layer is kneaded in an extruder under the conditions of a Q/Ns (discharge rate/rotating speed) ratio of 0.15 or more and less than 0.30 and a screw rotating speed (Ns) of the twin screw extruder in the range of 50 rpm or more and less than 150 rpm in the case where the twin screw extruder has an inside diameter of 58 mm and an L/D ratio of 42. In addition, by setting the temperature of the extruder to 140°C or more and 210°C or less and controlling the temperature of the resin being kneaded to below 210°C, it becomes possible to prevent a decrease in the molecular weight and form a nonuniform structure, thereby realizing a desirable puncture elongation, meltdown resistance, and air permeation resistance.

If the Q/Ns ratio is less than 0.15 or the resin temperature is higher than 210°C, the shearing caused by kneading and molecular degradation caused by heat will be accelerated, leading to a decrease in strength, a fall in the meltdown temperature, and a deterioration in processability due to a loss of low molecular weight components. If the Q/Ns is 0.30 or more or the resin temperature is lower than 140°C, a larger puncture elongation may be realized, but it will lead to insufficient melting of the resin, excessively large separation of the polyethylene and polypropylene, large variations in physical properties in the product, and adverse influence on its appearance.

The Q/Ns (discharge rate/rotating speed) ratio may be further increased in an permissible range by using an extruder with a larger inside diameter or a different screw segment, but it is important not only to control the puncture elongation in a desirable range, but also to maintain the dispersion at or below a certain degree so that the high molecular weight polypropylene is scattered in micron-order size.

Kneading in the aforementioned specific range serves to depress excessive molecular degradation, maintain the air permeation resistance at a relatively low level, control the impedance, which is associated with the output characteristics of the battery, in a relatively low range, and in addition, ensures a desirable puncture elongation at 90°C and a low shutdown temperature.

### (B) Formation of gel-like multilayered sheet,

A gel-like multilayered sheet is formed by cooling the resulting extruded molding. By cooling it, the microphases of the solutions for the first layer and the second layer, which are separated by the plasticizer, can be immobilized. In general, with a decreasing cooling rate, pseudo-cell units become larger and the high-order structures in the resulting gel-like multilayered sheet become coarser, whereas a higher cooling rate leads to dense cell units. Useful cooling methods include bringing it into contact with a cooling medium such as cooling air and cooling water and bringing it into contact with a cooling roll.

A suitable cooling temperature may be adopted appropriately, but it is cooled preferably at a temperature of 15°C to 40°. The cooling rate is preferably in the range of 0.1 °C/sec to 100°C/sec, more preferably 0.5°C/sec to 50°C/sec, and particularly preferably 1.0°C/sec to 30°C/sec, before reaching 50°C. A cooling rate in the above range serves to produce a multilayered microporous polyolefin film having a desirable strength. If the cooling rate is lower than 0.1°C/sec, not only a uniform gel sheet cannot be formed, but also phase separation of polypropylene is likely to progress excessively to cause an increase in air permeation resistance, whereas if it exceeds 100°C/sec, phase separation of polypropylene may not occur in some cases, resulting in a structure that is not desirable for the puncture elongation at 90°C.

### (C) First stretching

The resulting gel-like multilayered sheet is stretched at least in one axial direction. Since the gel-like multilayered sheet contains a plasticizer, it can be stretched uniformly. It is preferable that the gel-like multilayered sheet is first heated and then stretched at a required ratio by the tenter method, roll method, inflation method, or a combination thereof. The stretching may be performed either uniaxially or biaxially, but biaxial stretching is preferred. In the case where biaxial stretching is adopted, it may be performed by any of simultaneous biaxial stretching, sequential stretching, or multi-stage stretching (for example, a combination of simultaneous biaxial stretching and sequential stretching).

In the case of uniaxial stretching, the stretch ratio (areal stretch ratio) is preferably 2 or more, more preferably 3 to 30. In the case of biaxial stretching, it is preferably 9 or more, more preferably 16 or more, and particularly preferably 25 or more. Either in the machine direction or in the width direction, it is preferable for the stretch ratio to be 3 or more, and the stretch ratio in the machine direction and that in the width direction may be identical to or different from each other. For the present step, the stretch ratio means the areal stretch ratio determined by comparing the microporous film immediately before entering the next step relative to the microporous film immediately before entering this step.

The lower limit of the stretching temperature is preferably 90°C or higher, more preferably 110°C or higher, still more preferably 112°C or higher, and still more preferably 113°C or higher. The upper limit of the stretching temperature is preferably 135°C or lower, more preferably 132°C or lower, and still more preferably 130°C or lower. If the stretching temperature is in the above range, it serves to prevent film rupture attributed to the stretching of the polyolefin resin, i.e. the low melting point component, thus enabling stretching to a high ratio. In addition, a fine polyolefin phase is developed to permit the formation of a large number of many fibrils scattered three dimensionally. Performing such stretching in an appropriate temperature range serves to control the through-hole diameter to allow a high porosity to be achieved even in a thin film. This enables the production of a film suitable for producing battery separators with enhanced safety and performance.

### (D) Removal of plasticizer

The plasticizer is removed (by washing) using a washing solvent. Washing solvents and methods for plasticizer removal are generally known, and their description is omitted here. For example, the methods disclosed in Japanese Patent No. 2132327 and Japanese Unexamined Patent Publication (Kokai) No. 2002-256099 can be used.

### (E) Drying

After removing the plasticizer, the multilayered microporous film is dried by the heat-drying technique or the air-dry technique. Any appropriate one of the conventional methods including heat-drying and air-drying (producing an air flow) can be used as long as it can remove the washing solvent. The treatment conditions adopted for removing volatile components such as washing solvent may be the same as those described in, for example, PCT international application WO2008/016174 or WO2007/132942.

### (F) Second stretching (optional)

It is preferable for the dried multilayered microporous film to be re-stretched at least uniaxially. It is preferable for the stretching of the multilayered microporous film to be performed while heating it by the tenter method as in the case of the aforementioned first stretching. The stretching may be performed either uniaxially or biaxially, but biaxial stretching is preferred. In the case where biaxial stretching is adopted, it may be performed by either simultaneous biaxial stretching or sequential stretching, but simultaneous biaxial stretching is preferred. There are no specific limitations on the stretching temperature, but in general, it is preferably 90°C to 135°C, more preferably 95°C to 130°C. If re-stretching is performed in the above range, the film is stretched in a sufficiently heated state and will not easily undergo rupture during stretching, allowing the polypropylene to maintain its phase separation structure.

### (G) Heat treatment

It is preferable for the multilayered microporous film subjected to second stretching to be heat-treated. While being held by clips, the multilayered microporous film is subjected to heat treatment with its width maintained constant (width-directional heat fixation treatment step). The heat treatment is preferably performed at 115°C to 135°C. If heat-treated at temperature of 115°C to 135°C, crystals in the multilayered microporous film are stabilized at that temperature, leading to the formation of uniform lamellae and a decrease in the shrinkage rate in the width direction.

### (H) Formation of other porous layers

Other layers different from the first and second layers may be formed on at least on one surface of the resulting multilayered microporous film. Such other layers include, for example, a porous layer (coat layer) formed from a filler-containing resin solution incorporating a filler and a resin binder, or a heat resistance resin. Such coating may be performed as required, for example, as described in PCT international application WO2008/016174.

### [Lithium ion secondary battery]

A typical lithium ion secondary battery that can be produced by applying the multilayered microporous polyolefin film according to the present embodiment contains a battery element consisting mainly of a negative electrode and a positive electrode disposed opposite to each other with a separator in between, and an electrolytic solution. There are no specific limitations on the electrode structure and generally known conventional structures may be adopted. For example, they include an electrode structure in which a disk-like positive electrode and negative electrode are disposed opposite to each other (coin type), an electrode structure in which a flat plate-like positive electrode and negative electrode are stacked alternately (laminate type), and an electrode structure in which belt-like positive electrode and negative electrode are stacked and wound (wound type). There are no specific limitations on the electrical power collector, positive electrode, cathode active material, negative electrode, anode active material, and electrolytic solution to be incorporated in a lithium ion secondary battery, and generally known conventional components may be appropriately combined.

### EXAMPLES

The present invention will now be illustrated in more detail with reference to examples, but the invention is not construed as being limited to the examples described below. The evaluation methods, analysis methods, and materials used in the Examples are as described below.

### (1) Weight average molecular weight (Mw) and molecular weight distribution (Mw/Mn)

The weight average molecular weight (Mw), number average molecular weight (Mn), and molecular weight distribution (Mw/Mn) of polypropylene, ultrahigh molecular weight polyethylene, and high density polyethylene were determined by gel permeation chromatography (GPC) under the conditions described below.
· Measuring apparatus: GPC-150C, manufactured by Waters Corporation
· Column: Shodex UT806M, manufactured by Showa Denko K.K.
· Column temperature: 135°C
· Solvent (mobile phase): o-dichlorobenzene
· Solvent flow rate: 1.0 ml/min
· Specimen concentration: 0.1 wt% (dissolving conditions: 135°C/1 h)
· Injected quantity: 500 µl
· Detector: differential refractometer (RI detector), manufactured by Waters Corporation
· Calibration curve: prepared based on a calibration curve of a monodisperse polystyrene standard specimen in combination with a predetermined conversion constant

### (2) Mesopentad fraction (mmmm fraction)

The mesopentad fraction (mmmm fraction) represents the proportion of pentad units of isotactic chain linkages in the a molecular chain, that is, the fraction of propylene monomer units each located at the center of a chain linkage consisting of five continuously meso-linked propylene monomer units. To determine the mesopentad fraction of a propylene homopolymer, ¹³C-NMR measurements were taken under the conditions described below and calculation was performed as follows: mesopentad fraction = (peak area at 21.7 ppm) / (peak area at 19 to 23 ppm).
· Measuring apparatus: JNM-Lambada 400 (manufactured by JEOL Ltd.)
· Resolution: 400 MHz
· Measuring temperature: 125°C
· Solvent: 1,2,4-trichlorobenzene / deuterated benzene = 7/4
· Pulse width: 7.8 µsec
· Pulse interval: 5 sec
· Number of integrations: 2,000
· Shift reference: TMS = 0 ppm
· Mode: single pulse broad band decoupling

### (3) Film thickness (µm)

A test piece of 95 mm × 95 mm was cut out and the film thickness was measured at five points in an appropriate region with a contact type film thickness gauge (Lightmatic, manufactured by Mitutoyo Corporation), followed by averaging the measurements to represent the film thickness.

### (4) Air permeation resistance (sec/100 cc)

The air permeation resistance (sec/100 cm³) of a microporous film was measured with a permeation measuring device (EGO-1T, manufactured by Asahi Seiko Co., Ltd.) according to the Oken type air permeation resistance measuring method specified in JIS P8117.

### (5) Puncture strength at 90°C (gf/µm)

In an atmosphere 90°C, a needle having a spherical end (curvature radius R = 0.5 mm) and a diameter of 1 mm was moved at a speed of 2 mm/second to pierce a microporous film and the maximum load was determined. Three measurements were taken and the average maximum load per unit film thickness was adopted as the puncture strength at 90°C.

### (6) Puncture strength at 90°C (mm)

In an atmosphere 90°C, a needle having a spherical end (curvature radius R = 0.5 mm) and a diameter of 1 mm was moved at a speed of 2 mm/second to pierce a microporous film and the distance traveled by the needle tip after contacting the film till causing puncture by piercing was determined. Three measurements were taken and the average distance traveled by the needle tip per unit film thickness was adopted as the puncture elongation at 90°C.

### (7) Shutdown temperature and meltdown temperature

While heating a microporous film at a heating rate of 5°C/min, the air permeation resistance was measured with an Oken type air permeation resistance gauge (EGO-1T, manufactured by Asahi Seiko Co., Ltd.), and the temperature at which the air permeation resistance reached the detection limit of 1 × 10⁵ sec/100 cc was determined to represent the shutdown temperature (°C). Overheating was continued after shutdown and the temperature at which the air permeation resistance reached below 1 × 10⁵ sec/100 cc again was determined to represent the meltdown temperature (°C).

### (8) AFM-IR measurement

The microporous polyolefin film prepared in an Example was cut with a microtome to expose a cross section in the machine direction to prepare a cross-sectional specimen with a thickness of 500 nm. The specimen was fixed on a ZnSe prism designed for AFM-IR measurement and an infrared laser beam was applied through the prism to the cross section of the first layer under ATR conditions, and the thermal expansion of the specimen caused by light absorption was detected as the displacement of the AFM cantilever.

An infrared laser beam was applied to the specimen under the conditions described below to take measurements.
· Measuring apparatus: Nano IR Spectroscopy System (manufactured by Anasys Instruments) · Light source: tunable pulsed laser (1 kHz)
· AFM mode: contact mode
· Measuring wave number range: 1,575 to 1,200 cm⁻¹
· Wave number resolution: 2 cm⁻¹
· Coaverages: 32
· Number of integrations: 2 or more
· Polarizing angle: 45°
· Number of measuring points : 2

To visualize the distribution of polypropylene in the cross section of the first layer, the region correspond to the first layer of the specimen (a region with a length of 10 µm in the machine direction and a depth in the thickness direction from the film surface containing the entire first layer) was measured by AFM-IR. During the AFM-IR measurement, the displacement of the AFM cantilever that was seen when irradiating the specimen with a laser beam of 1,465 cm⁻¹ and 1,376 cm⁻¹ was determined, and the polypropylene content was calculated from the proportion in strength and used for mapping (Fig. 1). The contents of polyethylene and polypropylene can be determined from the CH bending of polyethylene measured under laser irradiation of 1,465 cm⁻¹ and the CH₃ bending of polypropylene measured under laser irradiation of 1,376 cm⁻¹. In addition, the regions where the polypropylene content was 20% or more (denoted by "a" in Fig. 1) and the region where it was less than 20% (denoted by "b" in Fig. 1) was divided and the proportion of the region where the polypropylene content was less than 20% in the region of the first layer was determined. Furthermore, the image obtained by AFM-IR measurement was binarized using HALCON13 of MVTec Software, and the regions having a polypropylene content of 20% or more were extracted and used to calculate the average of their maximum diameters. The region of the first layer was identified from optical microscope observation of the specimen.

The microporous polyolefin film obtained in each Example was rated as "o" if the region having a polypropylene content of less than 20% (sea domain) accounted for 30% or more and 60% or less, or otherwise it was rated as "×". The film was rated as "o" if the regions having a polypropylene content of 20% or more (island domains) in the first layer had an average maximum diameter of 0.1 µm or more and 10 µm or less, or otherwise it was rated as "×".

### (9) Output characteristics

When the film is used as a battery separator, the output characteristics of the battery can be improved by decreasing the ion resistance. The microporous film was rated as good (∘) if the air permeation resistance was less than 200 sec/100 cc and rated as poor (×) if it was 200 sec/100 cc or more.

### (10) Resistance to foreign objects

If foreign objects in a high temperature battery, the film preferably has a large elongation in order to prevent the separator from being ruptured by the foreign objects, and the puncture elongation at 90°C, which is within the high temperature operating range of common batteries, is preferably large. The microporous film was rated as good (∘) if the puncture elongation at 90°C was 0.35 mm/µm or more and rated as poor (×) if it was less than 0.35 mm/µm.

### (11) High temperature shape retaining property

In order to allow the film to maintain insulation and resist inertial heat generation in case abnormal heat generation from the battery occurs to activate the shutdown function, the film preferably has a high heat resistance and specifically, the microporous film preferably has a high meltdown temperature. In view of this, the microporous film was rated as good (∘) if the meltdown temperature, which represents the high temperature shape retaining property, was 170°C or more, which cannot be achieved by low melting point PE alone, and rated as poor (×) if it was less than 170°C.

### (Example 1)

### (1) Preparation of polyolefin resin solution for first layer

First, 20 mass% of ultrahigh molecular weight polypropylene with a Mw of 2.0 × 10⁶ (isotactic, mesopentad fraction 95.5%) and 80 mass% of high density polyethylene with a Mw of 4.0 × 10⁵ were mixed to produce 100 mass% of polyolefin, and 0.2 mass% of tetrakis[methylene-3-(3,5-ditertiarybutyl-4-hydroxyphenyl)-propionate] methane was added as antioxidant to prepare a polyolefin mixture. The resulting polyolefin mixture was fed to a twin screw extruder (inside diameter 58 mm, L/D=42), and liquid paraffin was supplied from the two side feeders of the twin screw extruder in such a manner that the concentration of polyolefin resin was adjusted to 23 mass%. Regarding the addition ratio of the liquid paraffin, the supply from the upstream side feeder accounted for 75% whereas that from the downstream side feeder accounted for 25%. A polyolefin resin solution for the first layer was prepared by maintaining a polyolefin mixture discharge rate (Q) of 33.9 kg/h, a kneading temperature of 200°C, and a screw rotating speed (Ns) of 138 rpm (discharge rate / rotating speed (Q/Ns) ratio maintained at 0.25 kg/h/rpm).

### (2) Preparation of polyolefin resin solution for second layer

First, 60 mass% of high density polyethylene with a Mw of 4.0 × 10⁵ (Mw/Mn=15) and 40 mass% of ultrahigh molecular weight polyethylene with a Mw of 2.0 × 10⁶ were mixed to produce 100 mass% of polyolefin, and 0.2 mass% of the same antioxidant as used for the first layer was added to prepare a polyolefin mixture. The resulting polyolefin mixture was fed to a twin screw extruder (inside diameter 58 mm, L/D=42), and liquid paraffin was supplied from the two side feeders of the twin screw extruder in such a manner that the concentration of polyolefin resin was adjusted to 25 mass%. Regarding the addition ratio of the liquid paraffin, the supply from the upstream side feeder accounted for 75% whereas that from the downstream side feeder accounted for 25%. A polyolefin resin solution for the second layer was prepared by maintaining a polyolefin mixture discharge rate (Q) of 72.1 kg/h, a kneading temperature of 200°C, and a screw rotating speed (Ns) of 292 rpm (Q/Ns ratio maintained at 0.25 kg/h/rpm).

### (3) Extrusion

The resin solutions are sent from the twin screw extruders to a three-layer T-die and extruded to form a structure of "resin solution for the first layer / resin solution for the second layer / resin solution for the first layer" with a layer thickness ratio of 1/8/1. The extruded product was cooled as it is wound up on a cooling roll controlled at a temperature of 25°C at a winding rate of 4 m/min to form a gel-like three-layered sheet.

### (4) First stretching, removal of film formation assistants, and drying

The gel-like three-layered sheet was subjected to simultaneous biaxial stretching (first stretching) at 119°C for five-fold stretching in both the machine direction and the width direction in a tenter stretching machine and, while still staying in the tenter stretching machine, it was heat-fixed at a temperature of 110°C with the sheet width maintained constant. Then, the stretched gel-like three-layered sheet was immersed in a methylene chloride bath in a washing tank to remove the liquid paraffin, and air-dried at room temperature.

### (5) Second stretching and heat treatment

Subsequently, the sheet was preheated at 125°C, stretched (second stretching) 1.5 times in the width direction in the tenter stretching machine, relaxed by 4% in the width direction, and heat-fixed at 126°C while still maintained in the tenter to provide a multilayered microporous polyolefin film. Film properties and battery properties of the resulting multilayered microporous polyolefin film are summarized in Table 1.

### (Example 2)

Except that a resin mixture consisting of 25 mass% of ultrahigh molecular weight polypropylene and 75 mass% of high density polyethylene was used for preparing a polyolefin resin solution for the first layer, the same procedure as in Example 1 was carried out to produce a multilayered microporous polyolefin film.

### (Example 3)

Except that the ultrahigh molecular weight polypropylene used in Example 1 for preparing a polyolefin resin solution for the first layer was replaced with an ultrahigh molecular weight polypropylene (isotactic, mesopentad fraction 94.8%) with a Mw of 2.0 × 10⁶ and that a resin mixture consisting of 70 mass% of high density polyethylene and 30 mass% of ultrahigh molecular weight polyethylene was used for preparing a polyolefin resin solution for the second layer, the same procedure as in Example 1 was carried out to produce a multilayered microporous polyolefin film.

### (Example 4)

Except that the ultrahigh molecular weight polypropylene used in Example 1 for preparing a polyolefin resin solution for the first layer was replaced with an ultrahigh molecular weight polypropylene (isotactic, mesopentad fraction 94.8%) with a Mw of 2.0 × 10⁶ and that a resin mixture consisting of 75 mass% of high density polyethylene and 25 mass% of ultrahigh molecular weight polyethylene was used for preparing a polyolefin resin solution for the second layer, the same procedure as in Example 1 was carried out to produce a multilayered microporous polyolefin film.

### (Example 5)

Except that the ultrahigh molecular weight polypropylene used in Example 1 for preparing a polyolefin resin solution for the first layer was replaced with an ultrahigh molecular weight polypropylene (isotactic, mesopentad fraction 95.6%) with a Mw of 2.0 × 10⁶ and that the high density polyethylene used in Example 1 for preparing a polyolefin resin solution for the second layer was replaced with a high density polyethylene with a Mw of 4.0 × 10⁵ (Mw/Mn=10), the same procedure as in Example 1 was carried out to produce a multilayered microporous polyolefin film.

### (Example 6)

Except that a polyolefin resin solution for the first layer was prepared at a screw rotating speed (Ns) of 145 rpm so that the Q/Ns ratio was adjusted to 0.24 kg/h/rpm, the same procedure as in Example 1 was carried out to produce a multilayered microporous polyolefin film.

### (Example 7)

Except that a polyolefin resin solution for the first layer was prepared at a screw rotating speed (Ns) of 130 rpm so that the Q/Ns ratio was adjusted to 0.27 kg/h/rpm, the same procedure as in Example 1 was carried out to produce a multilayered microporous polyolefin film.

### (Comparative Example 1)

Except that the resin mixture used for preparing a polyolefin resin solution for the first layer contained no ultrahigh molecular weight polypropylene and consisted of 70 mass% of high density polyethylene with a Mw of 4.0 × 10⁵ and 30 mass% of ultrahigh molecular weight polyethylene with a Mw of 2.0 × 10⁶, that the resin concentration in the polyolefin resin solution for the first layer was 25%, and that the formation of the second layer was omitted, the same procedure as in Example 1 was carried out to produce a monolayered microporous polyolefin film.

### (Comparative Example 2)

Except that a resin mixture consisting of 15 mass% of ultrahigh molecular weight polypropylene and 85 mass% of high density polyethylene was used for preparing a polyolefin resin solution for the first layer, the same procedure as in Example 1 was carried out to produce a multilayered microporous polyolefin film.

### (Comparative Example 3)

Except that a resin mixture consisting of 50 mass% of ultrahigh molecular weight polypropylene and 50 mass% of high density polyethylene was used for preparing a polyolefin resin solution for the first layer, that the resin concentration in the polyolefin resin solution for the first layer was 30 mass%, that a resin mixture consisting of 70 mass% of high density polyethylene and 30 mass% of ultrahigh molecular weight polyethylene was used for preparing a polyolefin resin solution for the second layer, that the resin concentration in the polyolefin resin solution for the second layer was 28.5%, and that extrusion was performed at a "second layer / first layer / second layer" thickness ratio of 38/24/38, the same procedure as in Example 1 was carried out to produce a multilayered microporous polyolefin film.

### (Comparative Example 4)

Except that a resin mixture consisting of 50 mass% of ultrahigh molecular weight polypropylene and 50 mass% of high density polyethylene was used for preparing a polyolefin resin solution for the first layer, that the resin concentration in the polyolefin resin solution for the first layer was 30 mass%, that a resin mixture consisting of 82 mass% of high density polyethylene and 18 mass% of ultrahigh molecular weight polyethylene was used for preparing a polyolefin resin solution for the second layer, and that extrusion was performed to form a structure of "polyolefin resin solution for the second layer / polyolefin resin solution for the first layer / polyolefin resin solution for the second layer" with a layer thickness ratio of 38/24/38, the same procedure as in Example 1 was carried out to produce a multilayered microporous polyolefin film.

### (Comparative Example 5)

Except that the ultrahigh molecular weight polypropylene used in Example 1 for preparing a polyolefin resin solution for the first layer was replaced with an ultrahigh molecular weight polypropylene (isotactic, mesopentad fraction 94.8%) with a Mw of 2.0 × 10⁶ and that the high density polyethylene used in Example 1 for preparing a polyolefin resin solution for the second layer was replaced with a high density polyethylene with a Mw of 4.0 × 10⁵ (Mw/Mn=5), the same procedure as in Example 1 was carried out to produce a multilayered microporous polyolefin film.

### (Comparative Example 6)

Except that 100% of the liquid paraffin was supplied to the twin screw extruder in preparing a polyolefin resin solution for the first layer, the same procedure as in Example 1 was carried out to produce a multilayered microporous polyolefin film.

### (Comparative Example 7)

Except that the ultrahigh molecular weight polypropylene used in Example 1 for preparing a polyolefin resin solution for the first layer was replaced with an ultrahigh molecular weight polypropylene (isotactic, mesopentad fraction 86.0%) with a Mw of 2.0 × 10⁶, the same procedure as in Example 1 was carried out to produce a multilayered microporous polyolefin film.

### (Comparative Example 8)

Except that a polyolefin resin solution for the first layer was prepared at a screw rotating speed of 240 rpm so that the Q/Ns ratio was adjusted to 0.18 kg/h/rpm, the same procedure as in Example 1 was carried out to produce a multilayered microporous polyolefin film.

### (Comparative Example 9)

Except that the ultrahigh molecular weight polypropylene used in Example 1 for preparing a polyolefin resin solution for the first layer was replaced with an ultrahigh molecular weight polypropylene (syndiotactic) with a Mw of 1.0 × 10⁶, the same procedure as in Example 1 was carried out to produce a multilayered microporous polyolefin film.

### (Comparative Example 10)

Except that the ultrahigh molecular weight polypropylene used in Example 1 for preparing a polyolefin resin solution for the first layer was replaced with an ultrahigh molecular weight polypropylene (atactic) with a Mw of 1.0 × 10⁶, the same procedure as in Example 1 was carried out to produce a multilayered microporous polyolefin film.

**[Table 1]**

| | | | Example 1 | Example 2 | Example 3 | Example 4 | Example 5 | Example 6 | Example 7 |
|---|---|---|---|---|---|---|---|---|---|
| resin solution for the first layer | PP | mass (%) | 20 | 25 | 20 | 20 | 20 | 20 | 20 |
| | | stereoregularity | isotactic | isotactic | isotactic | isotactic | isotactic | isotactic | isotactic |
| | | mesopentad fraction (%) | 95.5 | 95.5 | 94.8 | 94.8 | 95.6 | 95.5 | 95.5 |
| | HDPE | mass (%) | 80 | 75 | 80 | 80 | 80 | 80 | 80 |
| | UHMwPE | mass (%) | 0 | 0 | 0 | 0 | 0 | 0 | 0 |
| | resin concentration | (%) | 23 | 23 | 23 | 23 | 23 | 23 | 23 |
| resin solution for the second layer | HDPE | mass (%) | 60 | 60 | 70 | 75 | 60 | 60 | 60 |
| | | Mw/Mn | 15 | 15 | 15 | 15 | 10 | 15 | 15 |
| | UHMwPE | mass (%) | 40 | 40 | 30 | 25 | 40 | 40 | 40 |
| | resin concentration | (%) | 25 | 25 | 25 | 25 | 25 | 25 | 25 |
| kneading conditions for resin solution for the first layer | proportion of liquid paraffin supplies | upstream (%)/ downstream (%) | 75/25 | 75/25 | 75/25 | 75/25 | 75/25 | 75/25 | 75/25 |
| | screw rotating speed | (rpm) | 138 | 138 | 138 | 138 | 138 | 145 | 130 |
| | Q/Ns (discharge rate/rotating speed) | (kg/h/rpm) | 0.25 | 0.25 | 0.25 | 0.25 | 0.25 | 0.24 | 0.27 |
| structure | thickness | (µm) | 9.0 | 9.0 | 9.0 | 9.0 | 9.0 | 9.0 | 9.0 |
| | layer structure* | | 1/2/1 | 1/2/1 | 1/2/1 | 1/2/1 | 1/2/1 | 1/2/1 | 1/2/1 |
| | proportion of inner layer thickness to total thickness | (%) | 80 | 80 | 80 | 80 | 80 | 80 | 80 |
| | total PP content in film | mass (%) | 32 | 32 | 24 | 20 | 32 | 32 | 32 |
| | total UHMwPE content in film | mass (%) | 4 | 5 | 4 | 4 | 4 | 4 | 4 |
| | 30% ≦ region with PP content of less than 20% ≦ 60% | | ○ | ○ | ○ | ○ | ○ | ○ | ○ |
| | 0.1 µm ≦ average maximum diameter of regions with PP content of 20% or more ≦ 10 µm | | ○ | ○ | ○ | ○ | ○ | ○ | ○ |
| property | air permeation resistance | (sec/100 cc) | 81 | 80 | 80 | 80 | 105 | 81 | 81 |
| | puncture strength at 90°C | (g/µm) | 13.6 | 10.5 | 12.3 | 11.0 | 11.8 | 10.6 | 14.0 |
| | puncture elongation at 90°C | (mm/µm) | 0.49 | 0.50 | 0.49 | 0.49 | 0.46 | 0.45 | 0.50 |
| | shutdown temperature | (°C) | 135.5 | 135.5 | 135.5 | 135.5 | 135.8 | 135.5 | 135.5 |
| | meltdown temperature | (°C) | 182.0 | 182.0 | 182.0 | 182.0 | 182.0 | 178.0 | 182.3 |
| battery property | output property | | ○ | ○ | ○ | ○ | ○ | ○ | ○ |
| | resistance to foreign objects | | ⊚ | ⊚ | ⊚ | ⊚ | ○ | ○ | ⊚ |
| | high temperature shape retaining property | | ○ | ○ | ○ | ○ | ○ | ○ | ○ |

| | | | | | | | | | |
|---|---|---|---|---|---|---|---|---|---|
| * "1" denotes the first layer and "2" denotes the second layer. | | | | | | | | | |

**[Table 2]**

| | | | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 |
|---|---|---|---|---|---|---|---|---|---|---|---|---|
| polyolefin resin solution for the first layer | PP | mass (%) | 0 | 15 | 50 | 50 | 20 | 20 | 20 | 20 | 20 | 20 |
| | | stereoregularity | - | isotactic | isotactic | isotactic | isotactic | isotactic | isotactic | isotactic | svndiotactic | atactic |
| | | mesopentad fraction (%) | - | 95.5 | 95.5 | 95.5 | 94.8 | 95.5 | 86.0 | 95.5 | - | - |
| | HDPE | mass (%) | 70 | 85 | 50 | 50 | 80 | 80 | 80 | 80 | 80 | 80 |
| | UHMwPE | mass (%) | 30 | 0 | 0 | 0 | 0 | 0 | 0 | 0 | 0 | 0 |
| | resin concentration | (%) | 25 | 23 | 30 | 30 | 23 | 23 | 23 | 23 | 23 | 23 |
| polyolefin resin solution for the second layer | HDPE | mass (%) | 0 | 60 | 70 | 82 | 60 | 60 | 60 | 60 | 60 | 60 |
| | | Mw/Mn | - | 15 | 15 | 15 | 5 | 15 | 15 | 15 | 15 | 15 |
| | UHMwPE | mass (%) | 0 | 40 | 30 | 18 | 40 | 40 | 40 | 40 | 40 | 40 |
| | resin concentration | (%) | 0 | 25 | 28.5 | 25 | 25 | 25 | 25 | 25 | 25 | 25 |
| kneading conditions for polyolefin resin solution for the first layer | liquid paraffin supply proportion | upstream (%)/ downstream (%) | 75/25 | 75/25 | 75/25 | 75/25 | 75/25 | 100/0 | 75/25 | 75/25 | 75/25 | 75/25 |
| | screw rotating speed | (rpm) | 138 | 138 | 138 | 138 | 138 | 138 | 138 | 240 | 138 | 138 |
| | Q/Ns (discharge rate/rotating speed) | (kg/h/rpm) | 0.25 | 0.25 | 0.25 | 0.25 | 0.25 | 0.25 | 0.25 | 0.18 | 0.25 | 0.25 |
| structure | thickness | (µm) | 12 | 9.0 | 14.0 | 25.0 | 9.0 | film production impossible | 9.0 | 9.0 | 9.0 | 9.0 |
| | layer structure* | | - | 1/2/1 | 2/1/2 | 2/1/2 | 1/2/1 | - | 1/2/1 | 1/2/1 | 1/2/1 | 1/2/1 |
| | proportion of inner layer thickness to total thickness | (%) | - | 80 | 24 | 24 | 80 | - | 80 | 80 | 80 | 80 |
| | total PP content in film | mass (%) | 0 | 3 | 12 | 5 | 4 | - | 4 | 4 | 4 | 4 |
| | total UHMwPE content in film | mass (%) | 0 | 32 | 23 | 16 | 32 | - | 32 | 32 | 32 | 32 |
| | 30% ≦ region with PP content of less than 20% ≦ 60% | | × | ○ | × | × | ○ | - | ○ | × | × | ○ |
| | 0.1 µm ≦ average maximum diameter of regions with PP content of 20% or more ≦ 10 µm | | × | ○ | × | × | ○ | - | × | × | × | × |
| property | air permeation resistance | (sec/100 cc) | 165 | 80 | 230 | 537 | 108 | - | 352 | 230 | 250 | 80 |
| | 90°C puncture strength | (gf/µm) | 25.5 | 14.8 | 13.3 | 9.7 | 12.1 | - | 11.1 | 10.3 | 7.4 | 11.2 |
| | puncture elongation at 90°C | (mm/µm) | 0.33 | 0.34 | 0.36 | 0.33 | 0.33 | - | 0.36 | 0.32 | 0.35 | 0.32 |
| | shutdown temperature | (°C) | 139.8 | 135.5 | 135.9 | 135.7 | 136.0 | - | 135.5 | 135.5 | 135.2 | 138.2 |
| | meltdown temperature | (°C) | 150.8 | 180.0 | 179.8 | 181.8 | 182.0 | - | 179.0 | 174.0 | 168.0 | 151.2 |
| battery property | output property | | ○ | ○ | × | × | ○ | - | × | × | × | ○ |
| | resistance to foreign objects | | × | × | ○ | × | × | - | ○ | × | ○ | × |
| | high temperature shape retaining property | | × | ○ | ○ | ○ | ○ | - | ○ | ○ | × | × |

| | | | | | | | | | | | | |
|---|---|---|---|---|---|---|---|---|---|---|---|---|
| "1" denotes the first layer and "2" denotes the second layer. | | | | | | | | | | | | |

### EXPLANATION OF NUMERALS

a: region where the polypropylene content is 20% or more
b: region where the polypropylene content is less than 20%

## Claims

1. A multilayered microporous polyolefin film comprising a second layer containing an ultrahigh molecular weight polyethylene and a high density polyethylene having, on each of the two surfaces thereof, a first layer containing an ultrahigh molecular weight polypropylene and a high density polyethylene, wherein, in the first layer analyzed by AFM-IR, the regions having a polypropylene content of less than 20% as determined from the displacement of the AFM cantilever measured by a method according to the description under a laser irradiation of 1,465 cm⁻¹ and under a laser irradiation of 1,376 cm⁻¹ account for 30% or more and 60% or less; the average of the maximum diameters of the regions having a polypropylene content of 20% or more is 0.1 µm or more and 10 µm or less; and the puncture elongation at 90°C is 0.40 mm/µm or more as measured by a method according to the description.

2. A multilayered microporous polyolefin film as set forth in claim 1, wherein the high density polyethylene in the second layer has a molecular weight distribution (Mw/Mn) of 11 or more as measured by a method according to the description.

3. A multilayered microporous polyolefin film as set forth in either claim 1 or 2, wherein at least either surface of the multilayered microporous polyolefin film is laminated with a porous layer.

4. A multilayered microporous polyolefin film as set forth in any one of claim 1 to 3 that is intended for use as a battery separator.

5. A production method for a multilayered microporous polyolefin film as set forth in any one of claims 1 to 4 comprising the steps (a) to (f) described below:
(a) a step for preparing a solution for the first layer by adding a plasticizer to a polyolefin resin containing a high density polyethylene resin and an ultrahigh molecular weight polypropylene resin to be used to form the first layer and melt-kneading it at a Q/Ns (discharge rate/rotating speed) ratio of 0.15 or more and less than 0.30 and a screw rotating speed (Ns) of the twin screw extruder in the range of 50 rpm or more and less than 150 rpm in the case where the twin screw extruder has an inside diameter of 58 mm and an L/D ratio of 42,
(b) a step for preparing a solution for the second layer by
adding a plasticizer to a high density polyethylene resin and an ultrahigh molecular weight polyethylene resin to be used to form the second layer and melt-kneading it,
(c) a step for forming a gel-like multilayered sheet by extruding, from the die, the solution for the first layer and the solution for the second layer prepared in the steps (a) and (b), and cooling at least one surface at a rate where the microphase is immobilized,
(d) a step for preparing a stretched multilayered molding by stretching the gel-like multilayered sheet in the machine direction and the width direction,
(e) a step for preparing a multilayered porous molding by extracting and removing the plasticizer from the multilayered stretched molding and drying it, and
(f) a step for providing a multilayered microporous polyolefin film by heat-treating the multilayered porous molding.

## Patentansprüche

1. Mehrschichtige mikroporöse Polyolefinfolie, umfassend eine zweite Schicht, die ein Polyethylen mit ultrahohem Molekulargewicht und ein Polyethylen hoher Dichte enthält, die auf jeder der zwei Oberflächen davon eine erste Schicht aufweist, die ein Polypropylen mit ultrahohem Molekulargewicht und ein Polyethylen hoher Dichte enthält, wobei in der ersten Schicht, analysiert durch AFM-IR, die Bereiche, die einen Polypropylengehalt von weniger als 20 % aufweisen, wie durch die Verschiebung des AFM-Cantilevers bestimmt, gemessen durch ein Verfahren gemäß der Beschreibung unter Laserbestrahlung von 1.465 cm⁻¹ und unter Laserbestrahlung von 1.376 cm⁻¹, 30 % oder mehr und 60 % oder weniger ausmachen; wobei der Durchschnitt der maximalen Durchmesser der Bereiche, die einen Polypropylengehalt von 20 % oder mehr aufweisen, 0,1 µm oder mehr und 10 µm oder weniger beträgt; und wobei die Punktionsdehnung bei 90 °C 0,40 mm/µm oder mehr beträgt, wie durch ein Verfahren gemäß der Beschreibung gemessen.

2. Mehrschichtige mikroporöse Polyolefinfolie wie in Anspruch 1 dargelegt, wobei das Polyethylen hoher Dichte in der zweiten Schicht eine Molekulargewichtsverteilung (Mw/Mn) von 11 oder mehr aufweist, wie durch ein Verfahren gemäß der Beschreibung gemessen.

3. Mehrschichtige mikroporöse Polyolefinfolie wie in Anspruch 1 oder 2 dargelegt, wobei zumindest eine der beiden Oberflächen der mehrschichtigen mikroporösen Polyolefinfolie mit einer porösen Schicht laminiert ist.

4. Mehrschichtige mikroporöse Polyolefinfolie wie in einem der Ansprüche 1 bis 3 dargelegt, die zur Verwendung als Batterieseparator vorgesehen ist.

5. Herstellungsverfahren für eine mehrschichtige mikroporöse Polyolefinfolie wie in einem der Ansprüche 1 bis 4 dargelegt, umfassend die nachstehend beschriebenen Schritte (a) bis (f):
(a) einen Schritt zur Herstellung einer Lösung für die erste Schicht durch Zusetzen eines Weichmachers zu einem Polyolefinharz, das ein Polyethylenharz hoher Dichte und ein Polypropylenharz mit ultrahohem Molekulargewicht enthält, das zur Bildung der ersten Schicht zu verwenden ist, und Schmelzkneten bei einem Q/Ns- (Ablassrate/Drehzahl) Verhältnis von 0,15 oder mehr und weniger als 0,30 und einer Schneckendrehzahl (Ns) des Doppelschneckenextruders im Bereich von 50 U/min oder mehr und 150 U/min oder weniger, in einem Fall, in dem der Doppelschneckenextruder einen Innendurchmesser von 58 mm und ein L/D-Verhältnis von 42 aufweist,
(b) einen Schritt zur Herstellung einer Lösung für die zweite Schicht durch Zusetzen eines Weichmachers zu einem Polyethylenharz hoher Dichte und einem Polyethylenharz mit ultrahohem Molekulargewicht, das zur Bildung der zweiten Schicht zu verwenden ist, und Schmelzkneten,
(c) einen Schritt zur Bildung eines gelähnlichen mehrschichtigen Blatts durch Extrudieren der Lösung für die erste Schicht und der Lösung für die zweite Schicht, die in Schritt (a) und (b) hergestellt wurden, aus der Form und Abkühlen zumindest einer Oberfläche mit einer Rate, bei der die Mikrophase immobilisiert wird,
(d) einen Schritt zur Herstellung eines gedehnten mehrschichtigen Formprodukts durch Dehnen des gelähnlichen mehrschichtigen Blatts in Maschinenrichtung und Breitenrichtung,
(e) einen Schritt zur Herstellung eines mehrschichtigen porösen Formprodukts durch Extrahieren und Entfernen des Weichmachers aus dem mehrschichtigen gedehnten Formprodukt und Trocknen desselben und
(f) einen Schritt zum Bereitstellen einer mehrschichtigen mikroporösen Polyolefinfolie durch Wärmebehandeln des mehrschichtigen porösen Formprodukts.

## Revendications

1. Film de polyoléfine microporeux multicouche comprenant une seconde couche contenant un polyéthylène à poids moléculaire ultra-élevé et un polyéthylène haute densité présentant, sur chacune de ses deux surfaces, une première couche contenant un polypropylène à poids moléculaire ultra-élevé et un polyéthylène haute densité, dans lequel, dans la première couche analysée par AFM-IR, les régions présentant une teneur en polypropylène de moins de 20 % telle que déterminée à partir du déplacement du porte-à-faux AFM mesuré par un procédé selon la description sous une irradiation laser de 1 465 cm⁻¹ et sous une irradiation laser de 1 376 cm⁻¹ représentent 30 % ou plus et 60 % ou moins ; la moyenne des diamètres maximaux des régions présentant une teneur en polypropylène de 20 % ou plus est de 0,1 µm ou plus et de 10 µm ou moins ; et l'allongement à la perforation à 90°C est de 0,40 mm/µm ou plus tel que mesuré par un procédé selon la description.

2. Film de polyoléfine microporeux multicouche selon la revendication 1, dans lequel le polyéthylène haute densité dans la seconde couche présente une distribution à poids moléculaire (Mw/Mn) de 11 ou plus, telle que mesurée par un procédé selon la description.

3. Film de polyoléfine microporeux multicouche selon la revendication 1 ou 2, dans lequel au moins l'une ou l'autre surface du film de polyoléfine microporeux multicouche est stratifiée avec une couche poreuse.

4. Film de polyoléfine microporeux multicouche selon l'une quelconque des revendications 1 à 3, qui est destiné à être utilisé comme séparateur de batterie.

5. Procédé de production d'un film de polyoléfine microporeux multicouche selon l'une quelconque des revendications 1 à 4, comprenant les étapes (a) à (f) décrites ci-dessous :
(a) une étape de préparation d'une solution pour la première couche en ajoutant un plastifiant à une résine de polyoléfine contenant une résine de polyéthylène haute densité et une résine de polypropylène à poids moléculaire ultra-élevé à utiliser pour former la première couche et en la malaxant à l'état fondu selon un rapport Q/Ns (débit de décharge/vitesse de rotation) de 0,15 ou plus et de moins de 0,30 et une vitesse de rotation des vis (Ns) de l'extrudeuse à deux vis dans la plage de 50 tr/min ou plus et de moins de 150 tr/min dans le cas où l'extrudeuse à deux vis présente un diamètre intérieur de 58 mm et un rapport L/D de 42,
(b) une étape de préparation d'une solution pour la seconde couche en ajoutant un plastifiant à une résine de polyéthylène haute densité et une résine de polyéthylène à poids moléculaire ultra-élevé à utiliser pour former la seconde couche et la malaxer à l'état fondu,
(c) une étape de formation d'une feuille multicouche de type gel en extrudant, à partir de la filière, la solution pour la première couche et la solution pour la seconde couche préparées dans les étapes (a) et (b), et en refroidissant au moins une surface à une vitesse où la microphase est immobilisée,
(d) une étape de préparation d'un moulage multicouche étiré en étirant la feuille multicouche de type gel dans la direction de la machine et la direction de largeur,
(e) une étape de préparation d'un moulage poreux multicouche en extrayant et en retirant le plastifiant à partir du moulage étiré multicouche et en le séchant, et
(f) une étape de fourniture d'un film de polyoléfine microporeux multicouche en traitant thermiquement le moulage poreux multicouche.
